# EUROPEAN PATENT SPECIFICATION

(11) **EP 1 736 651 B1**
(45) Date of publication and mention of the grant of the patent: **13.10.2010**
(21) Application number: 06115859.8
(22) Date of filing: 22.06.2006
(51) Int. Cl.: F02C 7/22, F01D 25/28

(54) **Gas turbine burner fuel feeding system**
Kraftstoffzuführsystem für Gasturbinen-Brenner
Système d'alimentation en carburant pour un brûleur de turbine à gaz

(30) Priority: 23.06.2005 IT TO20050441
(43) Date of publication of application: 27.12.2006
(73) Proprietor: ANSALDO ENERGIA S.P.A., 16152 Genova (IT)
(72) Inventor: Dotta, Claudio, 17044 S. Martino Stella (IT); Como, Ivo, 15060 S. Cristoforo (IT)
(74) Representative: Jorio, Paolo

(56) References cited:
- EP-A- 1 662 116
- EP-A2- 1 278 014
- DE-A1- 4 335 412
- JP-A- 2000 097 435
- US-A- 5 168 698
- US-A- 5 261 222
- US-A1- 2002 069 647

## Description

The present invention relates to a feeding system for gas turbine burners using tubes of predetermined flexibility capable of reliably connecting, aboard the machine, respective attachments of each burner to respective annular feeding manifolds of a combustible fluid; the fluid may consist of methane gas, syngas, combustible oil and water (the latter used to achieve NOx emissions reduction) or other.

Gas turbine burners are mounted, through a flange, to the external case of the turbine, in a zone in which temperatures reach the order of 400-450°C; this zone is subject, during machine start-up, to considerable radial and axial thermal expansions and, consequently, the connection with the fuel feeding lines, which are found at a running temperature in the range from 20°C to 210°C (therefore considerably lower, also when "hot") must be made with pipes having limited and appropriate stiffness, to prevent excessive thrust on the attachments of the pipes, with consequent breakage. US-A-5261222 discloses a gas turbine having a burner fending system with the features of the preamble of claim 1.

Currently, as e.g. shown in US-A-5168698 and US-A-5261222, the connection between manifolds and burners (a high number of which are present) in annular gas turbines for the production of electrical energy is made with rigid wall steel pipes, which are not straight and which indeed present a tortuous course presenting numerous curves, to limit their rigidity with respect to the longitudinal axis of the turbine, arranged essentially horizontally in use.

Three manifolds are used for gas turbines fed with natural gas only: pilot gas, premix gas, diffusion gas and the rigid wall pipes are fluid-tightly connected to the manifold by means of tapered unions with metal-on-metal contact. The three manifolds have octagonal shape, two are relatively very larger (diffusion gas line and premix gas line) than the third (pilot gas line) and are made using numerous weldings between straight segments and curved segments.

Such known technique is not free from drawbacks:
a) the manifolds are installed aboard the gas turbine at a relatively high distance from the burners (approximately 3 metres) to allow to make rigid wall pipes, connected towards the single burners, according to a route characterised by numerous curves which ensure a suitable, predetermined flexibility following thermal stress;
b) the known manifolds as a whole require the use of large connection supports to the external case of the gas turbine, because, in addition to their considerably weight, the two large manifolds have significant axial dimensions and it would be extremely complex and costly to position them concentrically on the same plane;
c) the connection points with the rigid wall tubes connecting to the burners do not have a uniform circumferential distribution, because the connection tubes to the burners require diversified courses between tubes with numerous bends and must avoid hindrances aboard the machine.

Simply replacing rigid wall pipes with composite flexible wall pipes, for example made according to Italian patent application TO2003A000589 dated July 30th, 2003, while presenting advantages, does not overcome the aforesaid drawbacks.

Also the solution according to patent US-A-5.271.218, besides referring to a single fuel feeding line, making use of a circular shape annular manifold instead of an octagonal one, and flexible pipes for connecting the manifold to the burners, does not allow to overcome the drawbacks of the known art, and instead increases dimensions, because the manifold is supported "off-engine", i.e. by supports independent of the turbine and of its external case, directly connected to the foundations of the gas turbine system; furthermore, it was experimentally found that flexible pipes of length equal to or longer than 3 metres require an intermediate support to limit deformation thereof under its own weight while allowing axial and radial thermal expansion thereof. Such intermediate support, in addition to make the fuel feeding system layout more complex, may create wear of the walls of the flexible pipes due to a so-called *Fretting Fatigue* phenomenon.

It is the object of the present invention to provide a gas turbine burner fuel feeding system free from the described drawbacks and which is at the same time adapted to work in the particularly demanding running conditions of fuel feeding lines aboard gas turbines, whose reliability is at least equal to that of rigid wall pipe-based systems used until now, and which does not present risks of damage while running of possible flexible parts made of metallic mesh, while ensuring a correct support of the pipes in the case of need.

It is also the object of the invention to provide a gas turbine burner fuel feeding system which is small in size, easy to assemble and disassemble, both during first on-site installation and during maintenance activities of the gas turbine and which allows to keep on stock only one flexible pipe for each feeding line, the flexible pipes being reciprocally the same for the twenty-four burners.

According to the present invention, a gas turbine burner feeding system according to that defined in claim 1 is therefore provided.

In particular, according to the invention, flexible wall pipes are used in combination with a plurality of annular manifolds having circular shape, which are concentrically supported essentially in a same axial assembly position, by means of a plurality of radial brackets integrally carried by the external case of the turbine.

Each fuel feeding line envisages a manifold, a plurality of flexible wall pipes for the hydraulic connection of the manifold to the burners and a fuel delivery conduit in the annular manifold.

The flexible wall pipes present a length of approximately 1.6 m and the fuel delivery conduit in the respective manifold of each fuel feeding line is hydraulically connected with a manifold inlet carried by a lower portion of the manifold and obliquely oriented downwards and on the opposite side of the burners with respect to an axis essentially perpendicular to an essentially horizontal axis of the turbine; the delivery conduit to the manifolds is arranged transversally with respect to the essentially horizontal axis of the turbine and, with respect to the latter, is slanted downwards in direction of the respective manifold inlet to which it is connected.

The advantages related to the described feeding system are evident.

The flexible connection pipes between the burners and the manifold of each fuel feeding line are much easier to handle with respect to both the rigid pipes and the flexible pipes of the known solutions, because the feeding system object of the invention allows to make such pipes with a short length (not exceeding 1.6 metres); furthermore, for each feeding line (Premix, Diffusion, Pilot), the flexible pipes are reciprocally the same for all the twenty-four burners.

The use of flexible burners of short length of approximately 1.6 metres also allows to avoid the use of resistors for heating the same to prevent the formation of condensation during machine downtime.

From a functional point of view, the invention allows to optimise the dimensions of the diffusion gas valves (from DN 250 to DN 80) and of the pilot gas regulation valves (from DN 50 to DN 80), making it possible to drastically reduce the dimensions of the entire diffusion line (from DN 250 to DN 80) and, by allowing to exceed the dimensional limits determined by the on-board machine hindrances, consequently allows to position the manifolds reciprocally concentrical and closer to the burners.

Further objects and advantages of the invention will be apparent in the description that follows of an embodiment thereof, given only by way of non-limitative example and with reference to the figures of the accompanying drawings, in which:
- figure 1 shows an elevated longitudinal schematic view of an external case of an annular gas turbine and respective burner fuel feeding system according to the invention;
- figure 2 schematically shows a front frontal view of the external case of figure 1 with parts removed, carrying the fuel feeding system of figure 1;
- figure 3 schematically shows a rear frontal view of the external case of figure 1, carrying the fuel feeding system according to the invention;
- figure 4 shows in magnified scale a detail of a lower portion of figure 3; and
- figures from 5 to 8 show respective perspective views of support brackets of annular manifolds of the fuel feeding system according to the invention, schematically shown of figure 3.

With reference to figures from 1 to 3, it is indicated as a whole by 1 a fuel feeding system to a burner 2 of a gas turbine of the known type, of which only the external case 3 is shown for the sake of simplicity.

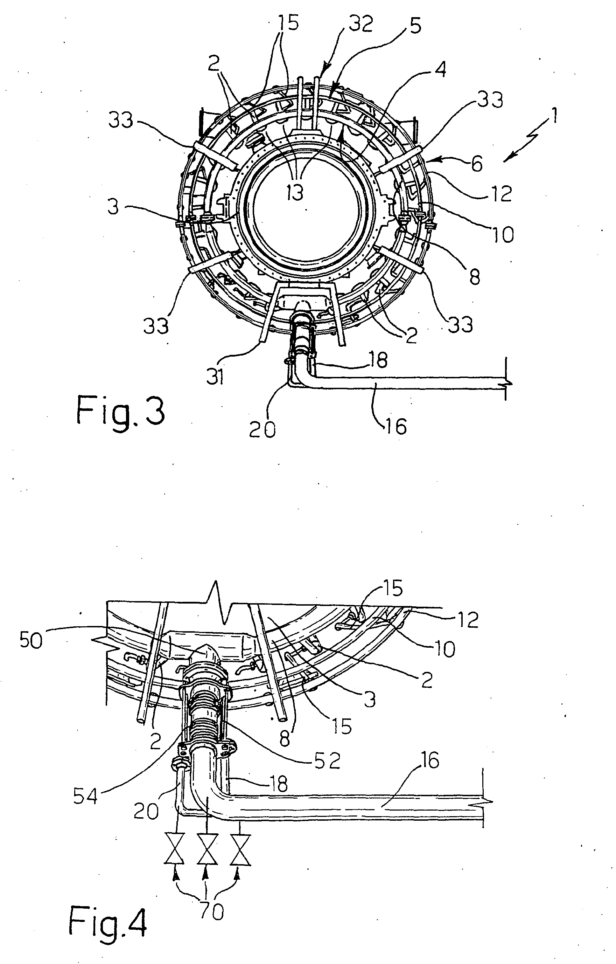

In the non-limitative system shown, related to an annular gas turbine, each burner 2 (of the numerous burners present, twenty-four for example) is preferably served by several fuel feed lines (three), only partially and schematically indicated, respectively (figure 3) as a premix gas line 4, a pilot gas line 5 and a diffusion gas line 6. Each line 4, 5 and 6 comprises a respective annular fuel distribution manifold, respectively indicated with numbers 8, 10 and 12, carried by case 3 and, as shown, directly supported by the same. Burners 2 present respective attachments which are connected in the known way and not shown, each to a respective manifold 8, 10, 12 by means of a corresponding pipe 13, 14, 15 presenting predetermined flexibility.

Pipes 13, 14, 15 are respectively free from rigid segments and are arranged as a crown externally to the external case 3 of the turbine; the fuel feeding lines 4, 5 and 6 also each comprise a fuel delivery conduit in the respective annular manifold, indicated with 16, 18, 20 for manifolds 8, 10, 12, respectively.

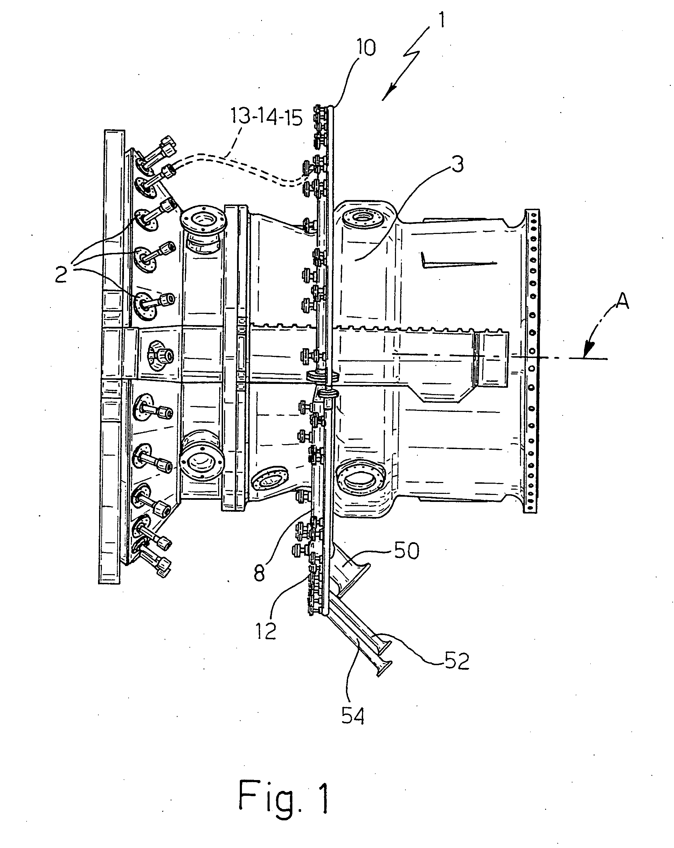

According to the invention, the annular manifold 8, 10, 12 of each fuel feeding line 4, 5, 6 presents circular shape and is concentrically supported with annular manifolds of all the other fuel feeding lines by means of a plurality of attachment brackets 31, 32, 33 (figure 3) radially and protrudingly carried by the external case 3 of the turbine and each supporting all the annular manifolds 8, 10, 12 essentially in a same axial assembly position on the external case 3 of the turbine (figure 1), chosen so as to make pipes 13, 14, 15 of predetermined flexibility relatively short.

In particular, the described fuel feeding system 1 comprising the three gaseous fuel feeding lines 4, 5, 6, each provided with its respective premix gas 8, pilot gas 10 and diffusion gas 12 manifolds concentrically fitted on the external case 3 of the turbine and in the same axial position, presenting the diffusion gas manifold 12 positioned radially and more externally with respect to the external case 3 of the turbine, than manifold 8 (which is instead radially more internal) and manifold 10 (which is arranged in a radially intermediate position); in this way, not only are the total dimensions of the feeding system 1 optimised, but so is also the possibility of disassembling of the diffusion gas manifold 12 and the entire respective fuel feeding line 6 in any moment when they are no longer required to let the gas turbine to operate.

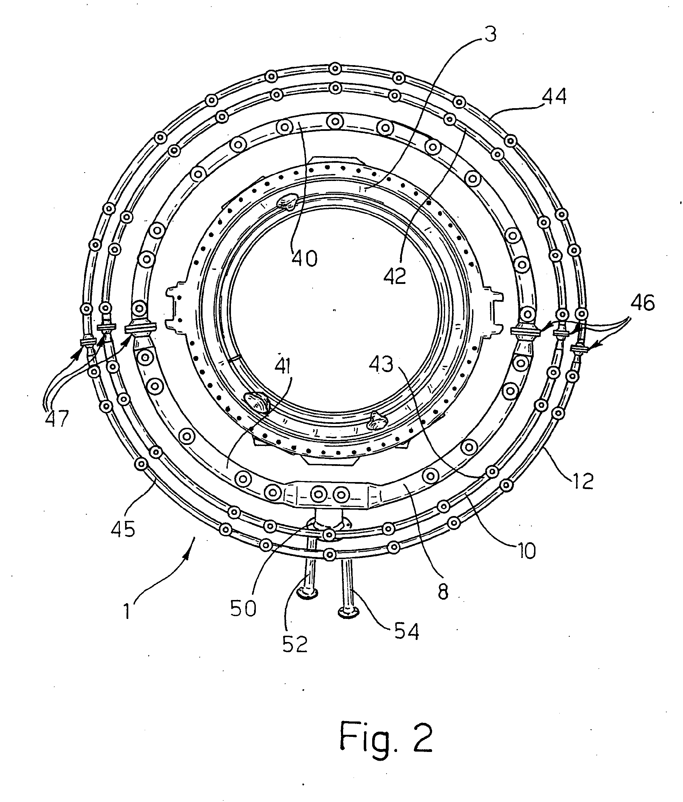

Each circular shape manifold 8, 10, 12 (figure 2) consists of at least two pipe segments, indicated by numbers 40, 41 for manifold 8, numbers 42, 43 for manifold 10, and numbers 44, 45 for manifold 12, respectively, bent as an arc of a circle with appropriate radius and reciprocally and fluid-tightly connected head-to-head at its opposite flanged ends 46, 47.

Pipes 13, 14, 15 of predetermined flexibility are made, for example, as described in Italian patent application TO2003A000589 dated July 30th, 2003, EP 06 115 859.8-2315 delimited by multiple flexibly side walls and presenting a maximum length of approximately 1.6 m according to the invention.

The fuel delivery conduit 16, 18, 20 of each manifold 8, 10, 12 of fuel feeding lines 4, 5, 6 is hydraulically connected to a manifold inlet, respectively indicated in figures 1, 2 and 3 by 50, 52, 54 carried by a lower portion of the respective manifold and obliquely oriented downwards and on the opposite side of burners 2 with respect to an axis perpendicular to axis A (figure 1), which is essentially the horizontal axis of the turbine, coinciding with the longitudinal axis symmetry of the external case 3; the delivery conduits 16, 18, 20 are arranged transversally with respect to axis A and, with respect to the latter, are slanted downwards, each from the side facing the respective manifold inlet 50, 52, 54 to which the manifolds 16, 18, 20 are connected.

Each delivery manifold 16, 18, 20 is provided with an elbow portion arranged lower than the rest of the conduit, i.e. further away downwards from axis A, provided with a condensation drain valve 70.

The external case 3 of the turbine externally and directly supports manifolds 8, 10, 12 in axial and radially concentric position and at a same relatively short predetermined axial distance from the burners 2 by means of a first bracket 31 lowerly integral with the external case 3 of the turbine, by means of a second bracket 32 carried upperly integral by the external case 3 of the turbine, and by means of a plurality (four) of lateral brackets 33 circumferentially spaced apart between the first bracket 31 and the second bracket 32, on both opposite sides of the external case 3 of the turbine.

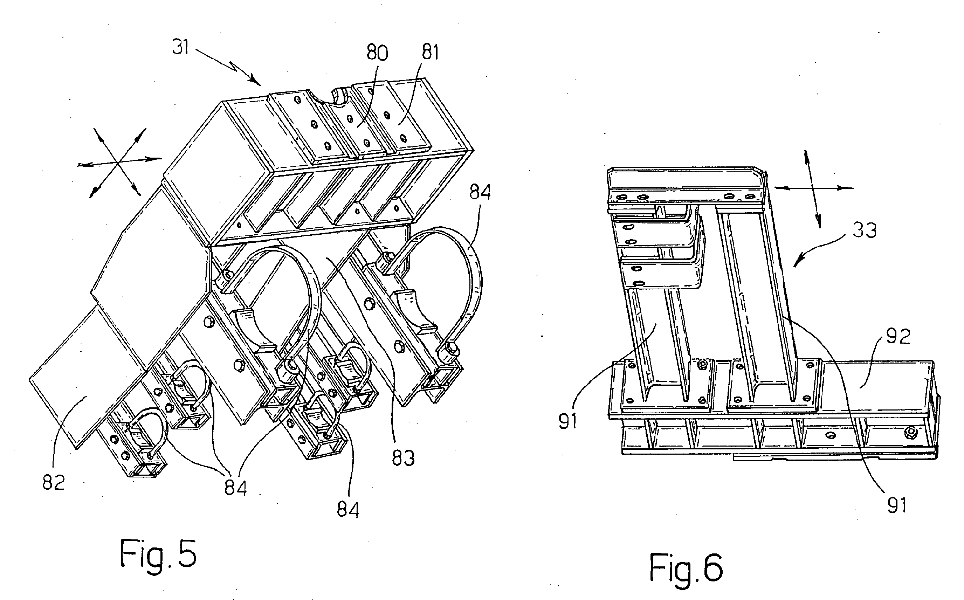

The first bracket 31 (figure 5) is essentially horseshoe-shaped and presents a base 80 secured radially, axially and integrally in use to the external case 3 of the turbine, for example by means of a bolted plate 81, and a pair of opposite protruding side arms 82, 83, which reciprocally spread towards the respective free ends, each provided with essentially rigid attachment means 84 for corresponding lower portions of manifolds 8, 10, 12. The distance between arms 82, 83, measured transversally to axis A, and their shape, is chosen so as to leave space for accommodating inlets 50, 52, 54, thus allowing the passage in essentially axial position of conduits 16, 18, 20.

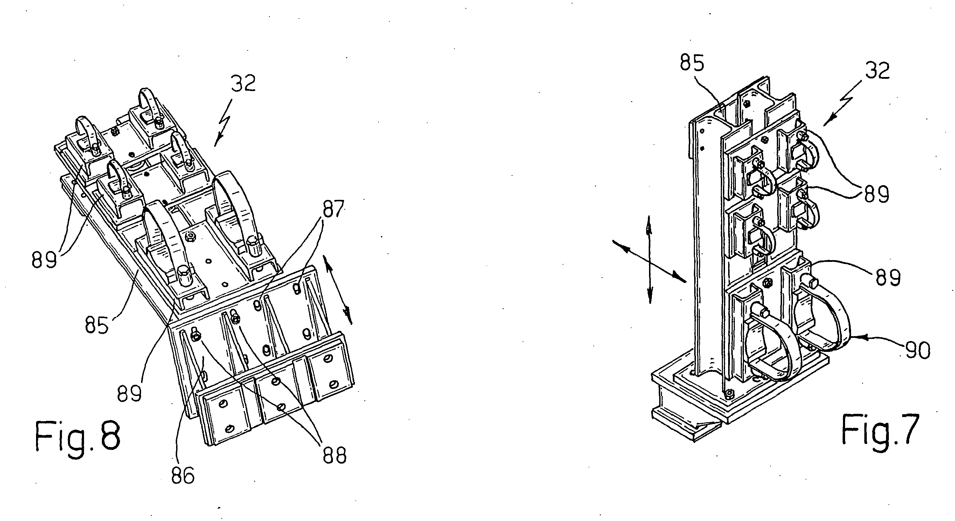

The second bracket 32 (figures 7, 8) is defined by a side member 85 axially, radially and integrally secured in use to the external case 3 of the turbine by means of a bolted plate 86; however, the latter supports the side member 85 in axially mobile manner by means of a series of slots 87 engaged by respective fastening screws 88; a plurality of slides 89 are slidingly carried along side member 85, so as to be able to vary its radial position with respect to the external case 3 of the turbine and allows the thermal radial expansion of the system manifolds; each slide 89 is provided with essentially rigid attachment means 90 similar to means 84, for example consisting of U-brackets, for corresponding upper portions of the respective manifolds 8, 10, 12.

The remaining four side brackets 33, arranged in pairs on both side of the external case 3 of the turbine, are each defined by a pair of reciprocally parallel side members 91 (figure 6) secured in use, by means of a large common base plate 92, axially, radially and integrally to the external case 3 of the turbine; manifolds 8, 10, 12 are simply inserted with clearance between the pair of side members 91 of each bracket 33 so as to limit their possible axial movements relative to the external case 3 of the turbine by means of the side members 91.

Bracket 31 constitutes the lower support of manifolds 8, 10, 12 and the fixed point of the entire gas distribution system 1, which needs to contrast the following loads:
- weight of manifolds 8, 10, 12 and flexible pipes 13, 14, 15 for feeding fuel to burners 2;
- fluid dynamic thrusts;
- earthquakes;
- thermal thrusts.

Bracket 31 is therefore capable of adapting to the circular shape of manifolds 8, 10, 12 while respecting the dimensions of the feeding segments to manifolds (inlets 50, 52, 54), positioned in the lower central part of the same.

The four side supports defined by brackets 33 contrast the axial fluid-dynamic thrusts but also allow the radial thermal expansion of the manifolds 8, 10, 12.

Finally, the upper support chosen as by bracket 32 has the same functions as the supports constituted by the four side brackets 33, but is designed to allow to have detachments to burners 2 on the upper middle line of manifolds 8, 10, 12, and is characterised by the described "sliding" fastening system which allows radial adjustment and at the same time leaves the manifolds 8, 10, 12 free to radially expand for thermal reasons.

## Claims

1. A gas turbine comprising a burner feeding system (1) in which each burner (2) is served by several fuel feeding lines (4, 5, 6); each fuel feeding line comprising an annular manifold (8, 10, 12) arranged externally to an external case of the turbine, a plurality of pipes (13, 14, 15) of predetermined flexibility but free from rigid segments arranged as a crown externally to the external case (3) of the turbine, each pipe (13, 14, 15) connecting one said annular manifold with an attachment to a respective burner (2), and a fuel delivery conduit (16, 18, 20) connected to the annular manifold; **characterised in that** the annular manifold (8, 10, 12) of each fuel feeding line presents a circular shape and is concentrically supported together with the annular manifolds of all other fuel feeding lines by means of a plurality of attachment brackets (31, 32, 33) protrudingly carried by the external case (3) of the turbine and each supporting all said annular manifolds (8, 10, 12) essentially in the same axial assembly position on the external case of the turbine, chosen so as to allow to make the pipes (13, 14, 15) relatively short.

2. A gas tartine according to claim 1, **characterised in that** it comprises three gaseous fuel feeding lines (4, 5, 6), each provided with a respective said manifold, premix gas (8), pilot gas (10) and diffusion gas (12) respectively, concentrically mounted on the external case of the turbine and in the same axial position; said diffusion gas manifold (12) being positioned radially more externally with respect to the external case (3) of the turbine.

3. A gas turbine according to claim 1 or 2, **characterised in that** each said circular shape manifold (8, 10, 12) consists of at least two pipe segments (40, 41, 42, 43, 44, 45) bent as an arc of a circle with appropriate radius and reciprocally and fluid-tightly connected head-to-head at opposite ends (46, 47) thereof.

4. A gas turbine according to one of the preceding claims, **characterised in that** said pipes (13, 14, 15) having predetermined flexibility are pipes delimited by multiple flexible side walls presenting a maximum length of approximately 1.6 m.

5. A gas turbine according to one of the preceding claims, **characterised in that** said fuel delivery conduit (16, 18, 20) connected to said respective manifold of each fuel feeding line is hydraulically connected to a manifold inlet (50, 52, 54) carried by a lower portion of the manifold and obliquely oriented downwards and on the opposite side of said burners with respect to an axis perpendicular to an essentially horizontal axis (A) of said turbine; said delivery conduit being arranged transversally with respect to the turbine and, with respect to the latter, being slanted downwards on the side facing the respective inlet of the manifold to which it is connected.

6. A gas turbine according to claim 5, **characterised in that** each said delivery conduit (16, 18, 20) is provided with an elbow portion arranged lower than the rest of the conduit, i.e. further away downwards from said essentially horizontal axis (A), provided with a condensation drain valve (70).

7. A gas turbine according to one of the preceding claims, **characterised in that** said external case (3) of the turbine externally and directly supports said manifolds in axially and radially concentric position and at a same predetermined axial distance from the burners by means of a first bracket (31) inferiorly and integrally carried by the external case of the turbine, by means of a second bracket (32) superiorly and integrally carried by the external case of the turbine, and by means of a plurality of side brackets (33) circumferentially spaced apart between the first and second brackets, on both opposite sides of the turbine.

8. A gas turbine according to claim 7, **characterised in that** said first bracket (31) is essentially horseshoe-shaped, presenting a base radially, axially and integrally secured to the external case of the turbine, and a pair of opposite protruding side arms (82,83), which reciprocally spread towards the respective free ends, each provided with essentially rigid attachment means (84) for corresponding lower portions of said manifolds.

9. A gas turbine according to claim 7 or 8, **characterised in that** said second bracket (32) is defined by a side member (85) axially, radially and integrally secured to said external case of the turbine and by a plurality of slides (89) slidingly carried along said side member, so as to be able to vary their radial position with respect to the external case of the turbine, each slide being provided with essentially rigid attachment means (89) for corresponding upper portions of a respective said manifold.

10. A gas turbine according to one of the claims from 7 to 9, **characterised in that** it comprises at least four side brackets (33), two on each side of the turbine, each of which is defined by a pair of reciprocally parallel side members (91) axially, radially and integrally secured to said external case of the turbine; said manifolds being inserted with clearance between said pair of side members (91) so as to limit possible relative axial movement of said manifolds with respect to the external case of the turbine by means of the side members, while letting the manifolds free to expand radially.

## Patentansprüche

1. Gasturbine mit einem BrennerZuführsystem (1), in dem jeder Brenner (2) über verschiedene Brennstoffzuführleitungen (4, 5, 6) versorgt wird; wobei jede Brennstoffzuführleitung ein ringförmiges Verteilerrohr (8, 10, 12), das außen an einem äußeren Gehäuse der Turbine angeordnet ist, eine Vielzahl von Rohren (13, 14, 15), die eine vorbestimmte Flexibilität aufweisen, aber frei von starren Segmenten sind und als ein Kranz außen an dem äußeren Gehäuse (3) der Turbine angeordnet sind, wobei jedes Rohr (13, 14, 15) ein ringförmiges Verteilerrohr über eine Befestigung mit einem entsprechenden Brenner (2) verbindet, und einen Brennstoffversorgungskanal (16, 18, 20), der mit dem ringförmigen Verteilerrohr verbunden ist, aufweist; **dadurch gekennzeichnet, dass** das ringförmige Verteilerrohr (8, 10, 12) der jeweiligen Brennstoffzuführleitung eine kreisförmige Gestalt aufweist und konzentrisch zusammen mit den ringförmigen Verteilerrohren der verbleibenden anderen Brennstoffzuführleitungen mittels einer Vielzahl von Befestigungshalterungen (31, 32, 33) gestützt wird, die hervorstehend durch das äußere Gehäuse (3) der Turbine gehalten werden und wovon jede sämtliche der ringförmigen Verteilerrohre (8, 10, 12) in im Wesentlichen in der gleichen axialen Einbauposition an dem äußeren Gehäuse der Turbine stützt und so gewählt sind, dass ermöglicht wird, dass die Rohre (13, 14, 15) relativ kurz sind.

2. Gasturbine gemäß Anspruch 1, **dadurch gekennzeichnet, dass** sie drei Gaszuführleitungen (4, 5, 6) aufweist, wovon jede mit einem entsprechenden Verteilerrohr für ein Vormischgas (8), für ein Zündgas (10) und für ein Diffusionsgas (12) vorgesehen ist, die konzentrisch an dem äußeren Gehäuse der Turbine und in der gleichen axialen Position befestigt sind; wobei das Verteilerrohr für das Diffusionsgas (12) radial weiter außen in Bezug auf das äußere Gehäuse (3) der Turbine positioniert ist.

3. Gasturbine gemäß Anspruch 1 oder 2, **dadurch gekennzeichnet, dass** das kreisgestaltförmige Verteilerrohr (8, 10, 12) aus zumindest zwei Rohrsegmenten (40, 41, 42, 43, 44, 45) besteht, die als ein Bogen eines Kreises mit geeignetem Radius gebogen sind und gegenseitig fluiddicht Kopf-an-Kopf an gegenüberliegenden Enden (46, 47) von diesen verbunden sind.

4. Gasturbine gemäß einem der vorangehenden Ansprüche, **dadurch gekenntzeichnet, dass** die Rohre (13, 14, 15), die eine vorbestimmte Flexibilität aufweisen, Rohre sind, die durch mehrere flexible Seitenwände, die eine maximale Länge von näherungsweise 1,6 m aufweisen, begrenzt sind.

5. Gasturbine gemäß einem der vorangehenden Ansprüche, **dadurch gekennzeichnet, dass** der Brennstoffversorgungskanal (16, 18, 20), der mit dem entsprechenden Verteilerrohr der jeweiligen Brennstoffzuführleitung verbunden ist, hydraulisch mit einem Verteilerrohreingang (50, 52, 54) verbunden ist, der durch einen unteren Abschnitt des Verteilerrohrs gehalten wird und schräg nach unten ausgerichtet ist und an der gegenüberliegenden Seite der Brenner in Bezug auf eine Achse angeordnet ist, die senkrecht auf einer im Wesentlichen horizontalen Achse (A) der Turbine steht; wobei der Versorgungskanal quer in Bezug auf die Turbine angeordnet ist und in Bezug auf Letztere nach unten an der Seite geneigt ist, die dem entsprechenden Eingang des Verteilerrohres, mit welchem er verbunden ist, zugewandt ist.

6. Gasturbine gemäß Anspruch 5, **dadurch gekennzeichnet, dass** der Versorgungskanal (16, 18, 20) mit einem Krümmungsabschnitt vorgesehen ist, der niedriger als der verbleibende Kanal angeordnet ist, d. h. weiter in Richtung nach unten entfernt von der im Wesentlichen horizontalen Achse (A), wobei der Krümmungsabschnitt mit einem Kondensationsablassventil (70) vorgesehen ist.

7. Gasturbine gemäß einem der vorangehenden Ansprüche, **dadurch gekennzeichnet, dass** das äußere Gehäuse (3) der Turbine die Verteilerrohre in axialer und radialer konzentrischer Position und in einer gleichen vorbestimmten axialen Strecke von den Brennern mittels einer ersten Halterung (31), die unten und einstückig durch das äußere Gehäuse der Turbine gehalten wird, mittels einer zweiten Halterung (32), die oben und einstückig durch das äußere Gehäuse der Turbine gehalten wird, und mittels einer Vielzahl von Seitenhalterungen (33), die in Umfangsrichtung zwischen der ersten und zweiten Halterung an beiden gegenüberliegenden Seiten der Turbine beabstandet sind, außen und unmittelbar stützt.

8. Gasturbine gemäß Anspruch 7, **dadurch gekennzeichnet, dass** die erste Halterung (31) im Wesentlichen hufeisenförmig ausgestaltet ist und eine Basis, die radial, axial und einstückig mit dem äußeren Gehäuse der Turbine befestigt ist, und ein Paar von gegenüberliegenden hervorstehenden Seitenarmen (82, 83) ausbildet, welche sich beiderseitig in Richtung der entsprechenden freien Enden erstrecken, wobei jeder mit im Wesentlichen starren Befestigungsmitteln (84) für entsprechende untere Abschnitte der Verteilerrohre vorgesehen ist.

9. Gasturbine gemäß Anspruch 7 oder 8, **dadurch gekennzeichnet, dass** die zweite Halterung (32) durch ein Seitenelement (85), das axial, radial und einstückig mit dem äußeren Gehäuse der Turbine befestig ist und durch eine Vielzahl von Gleiteinrichtungen (89), die gleitend entlang des Seitenelements gehalten werden, festgelegt ist, um zu ermöglichen, dass sie ihre radiale Position in Bezug auf das äußere Gehäuse der Turbine ändern, wobei jede Gleiteinrichtung mit im Wesentlichen starren Befestigungsmitteln (89) für entsprechende obere Abschnitte eines entsprechenden Verteilerrohrs vorgesehen ist.

10. Gasturbine gemäß einem der Ansprüche 7 bis 9, **dadurch gekennzeichnet, dass** sie zumindest vier Seitenhalterungen (33), zwei an jeder Seite der Turbine, aufweist, wovon jede durch ein Paar von beiderseitig parallelen Seitenelementen (91), die axial, radial und einstückig mit dem äußeren Gehäuse der Turbine befestigt sind, festgelegt ist; wobei die Verteilerrohre in einen Zwischenraum zwischen dem Paar von Seitenelementen (91) eingesetzt werden, um eine mögliche relative axiale Bewegung der Verteilerrohre in Bezug auf das äußere Gehäuse der Turbine durch die Seitenelemente zu begrenzen, während ein freies radiales Ausbreiten der Verteilerrohre zugelassen wird.

## Revendications

1. Turbine à gaz comprenant un système d'alimentation de brûleurs (1) dans lequel chaque brûleur (2) est alimenté par plusieurs lignes d'alimentation en carburant (4, 5, 6) ; chaque ligne d'alimentation en carburant comprenant un collecteur annulaire (8, 10, 12) agencé extérieurement à un boîtier externe de la turbine, une pluralité de tuyaux (13, 14, 15) de flexibilité prédéterminée mais sans segments rigides agencés comme une couronne extérieurement au boîtier externe (3) de la turbine, chaque tuyau (13, 14, 15) reliant ledit collecteur annulaire avec un élément de fixation à un brûleur respectif (2), et une conduite de distribution de carburant (16, 18, 20) reliée au collecteur annulaire ; **caractérisée en ce que** le collecteur annulaire (8, 10, 12) de chaque ligne d'alimentation en carburant présente une forme circulaire et est soutenu de manière concentrique conjointement avec les collecteurs annulaires de toutes les autres lignes d'alimentation en carburant au moyen d'une pluralité de consoles de fixation (31, 32, 33) portées en saillie par le boîtier externe (3) de la turbine et chacune soutenant la totalité lesdits collecteurs annulaires (8, 10, 12) essentiellement dans la même position axiale d'assemblage sur le boîtier externe de la turbine, choisie de manière à permettre de rendre les tuyaux (13, 14, 15) relativement courts.

2. Turbine à gaz selon la revendication 1, **caractérisée en ce qu'**elle comprend trois lignes d'alimentation en carburant gazeux (4, 5, 6), chacune pourvue dudit collecteur respectif, d'un gaz de pré-mélange (8), d'un gaz pilote (10) et d'un gaz de diffusion (12) respectivement, montées de manière concentrique sur le boîtier externe de la turbine et dans la même position axiale ; ledit collecteur de gaz de diffusion (12) étant positionné plus extérieurement de manière plus radiale par rapport au boîtier externe (3) de la turbine.

3. Turbine à gaz selon la revendication 1 ou 2, **caractérisée en ce que** chaque dit collecteur de forme circulaire (8, 10, 12) est composé d'au moins deux segments de tuyau (40, 41, 42, 43, 44, 45) courbés comme un arc de cercle avec un rayon approprié et relié en va-et-vient et de manière étanche aux fluides directement à ses extrémités opposées (46, 47).

4. Turbine à gaz selon l'une des revendications précédentes, **caractérisée en ce que** lesdits tuyaux (13, 14, 15) ayant une flexibilité prédéterminée sont des tuyaux délimités par de multiple parois latérales flexibles présentant une longueur maximale d'approximativement 1.6 m.

5. Turbine à gaz selon l'une des revendications précédentes, **caractérisée en ce que** ladite conduite de distribution de carburant (16, 18, 20) reliée audit collecteur respectif de chaque ligne d'alimentation en carburant est reliée hydrauliquement à une entrée de collecteur (50, 52, 54) portée par une partie inférieure du collecteur et orientée obliquement vers le bas et sur le côté opposé desdits brûleurs par rapport à un axe perpendiculaire à un axe essentiellement horizontal (A) de ladite turbine ; ladite conduite de distribution étant agencée de manière transversale par rapport à la turbine et, par rapport à cette dernière, étant inclinée vers le bas sur le côté face à l'entrée respective du collecteur auquel elle est reliée.

6. Turbine à gaz selon la revendication 5, **caractérisée en ce que** chaque dite conduite de distribution (16, 18, 20) est pourvue d'une partie de coude agencée de sorte à être inférieure au reste de la conduite, c'est-à-dire plus loin vers le bas dudit axe essentiellement horizontal (A), pourvue d'une soupape de purge de condensation (70).

7. Turbine à gaz selon l'une des revendications précédentes, **caractérisée en ce que** ledit boîtier externe (3) de la turbine soutient extérieurement et directement lesdits collecteurs dans une position axialement et radialement concentrique et à la même distance axiale prédéterminée des brûleurs au moyen d'une première console (31) intégralement portée en bas par le boîtier externe de la turbine, au moyen d'une deuxième console (32) intégralement portée en haut par le boîtier externe de la turbine, et au moyen d'une pluralité de consoles latérales (33) écartées de manière circonférentielle entre les première et deuxième consoles, sur des deux côtés opposés de la turbine.

8. Turbine à gaz selon la revendication 7, **caractérisée en ce que** ladite première console (31) est essentiellement en forme de fer à cheval, présentant une base radialement, axialement et intégralement fixée au boîtier externe de la turbine, et une paire de bras latéraux en saillie opposés (82, 83), qui sont répartis dans un mouvement de va-et-vient vers les extrémités libres respectives, chacun pourvu de moyens de fixation essentiellement rigides (84) pour des parties inférieures correspondantes desdits collecteurs.

9. Turbine à gaz selon la revendication 7 ou 8, **caractérisée en ce que** ladite deuxième console (32) est définie par un élément latéral (85) axialement, radialement et intégralement fixé audit boîtier externe de la turbine et par une pluralité de glissières (89) portées en coulissement le long dudit élément latéral, de sorte à être capable de varier leur position radiale par rapport au boîtier externe de la turbine, chaque glissière étant pourvue essentiellement de moyens de fixation rigides (89) pour des parties supérieures correspondantes dudit collecteur respectif.

10. Turbine à gaz selon l'une des revendications de 7 à 9, **caractérisée en ce qu'**elle comprend au moins quatre consoles latérales (33), deux sur chaque côté de la turbine, dont chacune est définie par une paire d'éléments latéraux parallèles en va-et-vient (91) axialement, radialement et intégralement fixée audit ledit boîtier externe de la turbine ; lesdits collecteurs étant insérés avec un jeu entre ladite paire desdits éléments latéraux (91) de sorte à limiter un mouvement axial relatif possible desdits collecteurs par rapport au boîtier externe de la turbine au moyen des éléments latéraux, tout en laissant les collecteurs libres de se dilater radialement.
